# EUROPÄISCHE PATENTANMELDUNG

(11) **EP 3 546 240 A1**
(43) Veröffentlichungstag der Anmeldung: **02.10.2019**
(21) Anmeldenummer: 18165078.9
(22) Anmeldetag: 29.03.2018
(51) Int. Cl.: B44C 5/04

(54) **BEIZBARE KUNSTHARZOBERFLÄCHE**

(71) Anmelder: SWISS KRONO Tec AG, 6004 Luzern (CH)
(72) Erfinder: BRAUN, Roger, 6130 Willisau (CH); STEINMANN, Pius, 6247 Schötz (CH)
(74) Vertreter: Kalkoff & Partner

(57) **Zusammenfassung**

Die Erfindung betrifft ein Verfahren zum Herstellen einer farblich veränderbaren Dekoroberfläche. Um eine Dekoroberfläche bereitzustellen, die in ihrer Farbgebung vom Endverbraucher besonders einfach verändert werden kann und die besonders kostengünstig und widerstandsfähig ist, ist vorgesehen, dass mindestens eine Schicht eines Beschichtungsmittels mit einem Beizadditiv, das die Aufnahme von Farbpartikeln ermöglicht, aufgetragen wird.

## Beschreibung

Die Erfindung betrifft ein Verfahren zum Herstellen einer farblich veränderbaren Dekoroberfläche nach Anspruch 1 und einen Werkstoff mit einer farblich veränderbaren Dekoroberfläche nach Anspruch 13.

Dekorative Oberflächen aus Kunstharz oder Lack sind allgemein bekannt und werden beispielsweise bei Fußbodenbelägen, Wandbelägen Deckenbelägen oder Möbeln verwendet. Diese weisen eine Dekorschicht auf, die ein Papier mit einem aufgedruckten Dekor oder ein auf einen Untergrund gedrucktes Dekor umfasst. Auf der Dekorschicht kann üblicherweise eine Schutzschicht angeordnet sein. Zudem ist es bekannt, die Oberfläche mit einem Strukturdekor zu versehen, das bspw. in die Oberfläche eingeprägt wird. Die oberhalb des Dekors angeordneten Schichten sind mindestens semi-transparent, damit der Betrachter das Dekor wahrnehmen kann.

Nachteilig ist, dass die farbliche Ausgestaltung derartiger Oberflächen im Nachhinein kaum beeinflusst werden kann. Insbesondere eine durch den Endverbraucher individuelle farbliche Oberflächengestaltung, wie sie beispielsweise bei Vollholz durch das Beizen der Oberflächen erreicht wird, ist bei derartigen Kunstharz- oder Lackoberflächen nicht mehr möglich.

Gerade im nordamerikanischen Raum besteht jedoch ein erhöhter Bedarf an dekorativen Oberflächen, die nachträglich durch den Endverbraucher selbst farblich gestaltet werden können, wobei die eigentlichen Dekorstrukturen sichtbar bleiben und nur der Farbton angepasst werden soll. Derartige vom Endverbraucher nachträglich farblich veränderbare Oberflächen konnten bisher ausschließlich über Vollholzoberflächen, wie beispielsweise bei Massivholz oder auch Holzfurnier, bereitgestellt werden.

Der Erfindung liegt somit die Aufgabe zugrunde, ein Verfahren zum Herstellen einer Dekoroberfläche und einen Werkstoff mit einer derartigen Dekoroberfläche bereitzustellen, die in ihrer Farbgebung vom Endverbraucher besonders einfach verändert werden kann und die besonders kostengünstig und widerstandsfähig ist.

Die Erfindung löst die Aufgabe mittels eines Verfahrens mit den Merkmalen des Anspruchs 1 und einem Werkstoff mit den Merkmalen des Anspruchs 13. Vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung.

Das erfindungsgemäße Verfahren zum Herstellen einer farblich veränderbaren Dekoroberfläche umfasst die Schritte: Bereitstellen einer verwendungsfertigen vollständig ausgehärteten Kunstharz oder Lack umfassenden Dekoroberfläche auf einer Trägerschicht, Auftragen mindestens einer Schicht eines Beschichtungsmittels mit einem Beizadditiv, Trocknen und Aushärten der Beschichtungsmittelschicht.

Bei üblichen ausgehärteten Dekoroberflächen aus Kunstharz oder Lack ist ein Eindringen von Farbpigmenten in die Schicht nicht mehr möglich. Allenfalls können Farbpigmente auf der Oberfläche abgelegt werden. Die nach dem erfinderischen Verfahren bereits fertig hergestellte Dekoroberfläche erhält daher mit der Schicht aus Beschichtungsmittel eine zusätzliche Beschichtung, die eine neue offenporige Oberfläche ausbildet, wodurch eine besonders einfache nachträgliche Farbanpassung (im Weiteren auch als Beizen bezeichnet) ermöglicht wird, wie es ansonsten nur beim Beizen von Massivholzoberflächen bekannt ist. Die nachträglich auftragbaren Farbstoffe (Farbpigmente) dringen in die zusätzliche Beschichtung ein und färben diese. Obwohl auf die Dekoroberfläche eine Schicht eines Beschichtungsmittels aufgetragen wurde, bleiben die guten technischen Eigenschaften bspw. der ursprünglichen Kunstharzoberfläche oder Lackoberfläche weitestgehend erhalten. Zudem kann aber auch auf die Schicht aus Beschichtungsmittel und die Farbstoffe aus der Beize eine Schutzschicht, bspw. eine Lackschicht aufgetragen werden.

Die Dekoroberfläche weist ein Dekordruck (im Weiteren auch Dekor) auf, der auf die Oberseite der Trägerschicht aufgedruckt ist. So kann das Dekor bspw. Strukturen eines Dekors zeigen. Insbesondere stellt das Dekor bspw. Holzmaserungen, Steinmaserungen, Steindekore, Fliesendekore oder auch Fantasiedekore dar. Das Dekor kann dabei als farbiges Dekor, Dekor in Grautönen oder auch Schwarz-Weiß-Dekor ausgebildet sein. Die Dekoroberfläche umfasst zudem eine transparente Schutzschicht, die beispielsweise als oberhalb des Dekors angeordnete transparente Lackschicht oder als transparente Kunstharzschicht, bspw. als transparentes kunstharzgetränktes Overlay ausgebildet sein kann. Alternativ kann beispielsweise bei der Verwendung einer tränkbaren Trägerschicht die Schutzschicht auch durch das ausgehärtete und vollständig getrocknete Tränkmittel der Trägerschicht gebildet werden. Als Tränkmittel kommen insbesondere kunstharzbasierte, aber selbstverständlich auch lackbasierte Tränkmittel im Sinne der Erfindung infrage.

Das Dekor ist im verwendungsfertigen Zustand für einen Betrachter sichtbar und bleibt auch nach Auftrag der Beschichtungsmittelschicht und dem anschließenden Farbauftrag (Beize) weiterhin sichtbar. Dementsprechend ist die Beschichtungsmittelschicht ebenfalls transparent ausgebildet.

So ist es bspw. mit der erfinderischen Dekoroberfläche möglich, einen durch ein an sich helles aufgedrucktes Dekor erzeugten hellen Gesamteindruck der verwendungsfertigen Dekoroberfläche, bspw. mittels einer dunklen Beize, dunkel zu gestalten. D. h., der aufgetragene Farbstoff (Farbpigmente) erzeugt eine dunkle Einfärbung der Oberfläche, wobei die zumindest weitestgehend transparente Schicht auch weitestgehend transparent bleibt und die aufgedruckte Dekorstruktur weiterhin sichtbar ist.

Unter farblich veränderbar wird verstanden, dass der von dem Dekoraufdruck auf der Trägerschicht vorgegebene farbliche Gesamteindruck der Dekoroberfläche nachträglich individuell über einen zusätzlichen Farbauftrag in die Beschichtungsmittelschicht verändert wird. Die nachträgliche farbliche Veränderung erfolgt dabei vorzugsweise nicht bei der industriellen Fertigung, sondern nachgeschaltet bspw. bei einem das Produkt verarbeitenden Handwerker oder durch den Endkunden selbst. Durch den üblicherweise auf die ganze Dekorfläche erfolgenden Auftrag der Beschichtungsmittelschicht kann der die nachträgliche Färbung Durchführende selbst entscheiden, ob er ebenfalls die ganze Dekorfläche oder nur Teile farblich verändert.

Wie bereits erwähnt bleiben bei der farblichen Veränderung die Dekorstrukturen vorzugsweise weiterhin sichtbar, nur der Grundfarbton der Dekoroberfläche wird über die Farbveränderung nochmals verändert. Hierdurch ist eine extrem hohe Individualisierung, bspw. durch den jeweiligen Endverbraucher, möglich. Bereits vorhandene Strukturdekore, d.h. strukturierte Oberflächen (3-D-Oberflächen), bleiben ebenfalls erhalten, da die Beschichtungsmittelschicht so dünn aufgetragen wird, dass sie die vorhandenen Oberflächenstrukturen nachbildet und die Farbpigmente in die Oberfläche eindringen. Bei strukturierten Oberflächen entsteht mit dem Beizen, d. h. mit der Farbtonveränderung, zudem eine dreidimensionale Wirkung der Oberfläche, da sich beispielsweise bei Holzdekoren im Bereich von strukturell ausgebildeten Poren (Vertiefungen in der 3-D-Struktur) mehr Beizadditive ansammeln, sodass auch nach dem Beizen mehr Farbpigmente aus der Beize in diesem Bereich vorliegen.

Die farbliche Anpassung der Dekoroberfläche kann dabei mit denselben Beizmitteln, bspw. einer wasserbasierten Beize, ölbasierten Beize oder einer Lösungsmittelbeize, wie auch mit denselben Vorrichtungen, wie bei einer normalen Holzoberflächenbeizung, durchgeführt werden.

Im Zusammenhang mit der Erfindung wird unter einer Kunstharzoberfläche ein Harz-Systeme verstanden, bei dem die vollständige Aushärtung der zur ggf. erfolgten Tränkung und/oder Beschichtung verwendeten Harze unter Einwirkung von Wärme und zusätzlich erzeugtem Druck (höher als atmosphärischer Druck), bspw. in einer Kurztaktpresse oder einer kontinuierlichen Presse, durchgeführt wurde. Kunstharzoberflächen können bspw. ein Harnstoffharz, Phenolharz, vorzugsweise jedoch ein Melaminharz umfassen.

Unter einer Lackoberfläche werden im Zusammenhang mit der Erfindung Harz-Systeme verstanden, bei denen zumindest die außen liegende Schicht der verwendungsfertigen Dekoroberfläche eine Lackoberfläche ist. Die vollständige Aushärtung von Lackoberflächen erfolgt drucklos (d.h. maximal unter atmosphärischem Druck) und ausschließlich unter Einwirkung von Wärme, UV-Strahlung, Elektronenstrahlung, oder Hochfrequenz. Lackoberflächen können insbesondere als Acrylat-Lacke oder PU-Lacke ausgebildet sein, die beispielsweise unter UV-Licht aushärten.

Die Dekoroberfläche kann ein- oder mehrschichtig sein. So kann die Dekoroberfläche bspw. durch ein kunstharzgetränktes Dekorpapier gebildet werden. Dabei bildet das oberseitig mit einem Dekor bedruckte Papier die Trägerschicht und das getrocknete und ausgehärtete Kunstharz, mit dem das Papier getränkt wurde, die Kunstharzoberfläche aus. Alternativ kann die Dekoroberfläche beispielsweise auch eine zusätzliche Schutzschicht in Form eines auf der Oberseite des Dekorpapiers angeordneten transparenten Overlays umfassen, das ebenfalls mit Kunstharz getränkt und mit dem Dekorpapier verpresst und ausgehärtet wurde. Auch können zusätzliche Schichten wie beispielsweise unterseitig an der Trägerschicht angeordnete Schichten zur Stabilisierung der Trägerschicht, beispielsweise Kraftpapierschichten oder eine Werkstoffschicht, wie bspw. eine Werkstoffplatte angeordnet sein.

Verwendungsfertige Dekoroberflächen im Sinne der Erfindung sind bspw. als HPL, CPL, DPL o.ä. bekannt, die entweder als Laminate zum Verbinden mit einem Werkstoff, insbesondere einer Werkstoffplatte ausgebildet sind oder bereits mit einem Werkstoff verbunden sind. Die als Kunstharzoberfläche ausgebildete Dekoroberfläche wurde dabei mittels Wärme und Druck in ihren verwendungsfertigen Zustand versetzt, in dem das Kunstharz beispielsweise als Duroplast vorliegt.

Auch kann eine Dekoroberfläche im Sinne der Erfindung als Lackoberfläche ausgebildet sein. Dabei kann das Dekor auf eine Trägerschicht aufgedruckt oder auflackiert sein. Oberhalb des Dekors kann eine zusätzliche, beispielsweise transparente Lackschicht, die als Schutzschicht ausgebildet ist, aufgetragen sein. Als Trägerschicht können hier ebenfalls Papierschichten, Folien aus Kunststoff oder auch Werkstoffe, insbesondere Plattenwerkstoffe, wie Holzwerkstoffplatten eingesetzt werden. So ist es beispielsweise möglich, dass die Dekoroberfläche durch eine im Direktdruckverfahren mit einem Dekor versehene Holzwerkstoffplatte ausgebildet wird. Auch können sogenannte Finishfolien, die ein aufgedrucktes Dekor auf der Oberseite und gegebenenfalls eine darüber angeordnete Schutzschicht aufweisen, als verwendungsfertige, vollständig ausgehärtete Dekoroberfläche verwendet werden. Finishfolien können beispielsweise auf eine Werkstoffplatte aufkaschiert werden.

Unter einem Werkstoff kann ein Werkstoffträgermaterial verstanden werden, das mit der Trägerschicht verbunden werden kann. Besonders bevorzugt wird als Werkstoff ein Wood-Plastic-Composite (WPC) oder ein Holzwerkstoff, insbesondere ein Faserwerkstoff, CDF-Werkstoff, MDF-Werkstoff, HDF-Werkstoff, Spanwerkstoff, OSB-Werkstoff, eine Faserzementplatte oder eine Gipsfaserplatte verwendet. Unter WPC werden dabei auch entsprechende Abwandlungen mit Papier oder Bambus als Füllstoff verstanden. Vorzugsweise ist der Werkstoff ein plattenförmiger Werkstoff, insbesondere eine WPC-Platte oder eine Holzwerkstoffplatte. Diese können in vorteilhafter Weise beispielsweise für Wandbeläge, Deckenbeläge oder Fußbodenbeläge verwendet werden. Gerade im Bereich des Innenausbaus für Wandbeläge, Deckenbeläge oder Fußbodenbeläge werden dabei Holzwerkstoffplatten wie beispielsweise CDF-Platten, MDF-Platten, HDF-Platten, Spanplatten oder OSB-Platten verwendet.

Die Dekoroberfläche ist unabhängig von ihrer Ausbildung als Kunstharz- oder Lackoberfläche sowohl vor dem Auftrag des Beschichtungsmittels mit Beizadditiven als auch vor der Durchführung einer farblichen Veränderung (Beizen) vollständig ausgehärtet und jeweils verwendungsfertig, d. h., die Dekoroberfläche muss auch nach dem Beschichtungsmittelauftrag nicht zwingend gebeizt werden. Zudem kann die Dekoroberfläche, wie bereits erwähnt, eine entsprechende Oberflächenstruktur, bspw. eine eingeprägte oder auflackierte Struktur aufweisen.

Unter einem Beizadditiv wird ein Zusatzstoff verstanden, der im Beschichtungsmittel vorliegt und die Ausbildung einer porösen Oberfläche (offenporig) der als Schicht aufgetragenen und getrockneten bzw. ausgehärteten Beschichtungsmittelschicht bewirkt.

Unter offenporig wird verstanden, dass die ausgehärtete Schicht des Beschichtungsmittels zur Aufnahme von Farbstoffen (Farbpigmenten) innerhalb der Schicht ausgebildet ist. Dies wird über das Beizadditiv erreicht. Die ausgehärtete Beschichtung kann dabei von semi-transparent bis vollständig transparent sein, sodass das auf der Trägerschicht aufgedruckte Dekor weitestgehend unbeeinflussbar wahrnehmbar ist. Es ist möglich, dass die ausgehärtete Beschichtung bereits einen ersten Grundfarbton über das Dekor legt, der später mittels des Farbauftrags und der Aufnahme der Farbstoffe in die Beschichtung nochmals verändert wird.

Um ein sowohl kurzfristiges als auch langfristiges Ablösen der Schicht aus Beschichtungsmittel von der Dekoroberfläche zu verhindern, wird die Dekoroberfläche besonders bevorzugt vorbehandelt. Durch die Vorbehandlung erfolgt eine Verbesserung der Anbindungsmöglichkeit der Beschichtungsmittelschicht an der Dekoroberfläche.

Nach einer Weiterbildung der Erfindung wird zur Vorbehandlung ein Haftvermittler auf die Dekoroberfläche aufgetragen, wobei der Haftvermittler als separate Schicht vor Auftrag der Beschichtungsmittelschicht aufgetragen und angeliert, angetrocknet oder vollständig ausgehärtet wird. Der Vermittler bildet direkt mit der Dekoroberfläche eine gute und dauerhafte Verbindung aus und weist zudem die Eigenschaft auf, mit der nachfolgenden, auf den Haftvermittler aufzutragenden Beschichtungsmittelschicht ebenfalls eine besonders dauerhafte Verbindung ausbilden zu können. Der Auftrag des Haftvermittlers kann entsprechend dem Auftrag der Beschichtungsmittelschicht, beispielsweise durch Sprühen, Walzen, Rakeln oder ähnlichem erfolgen.

Alternativ oder ergänzend wird der Haftvermittler besonders bevorzugt gemeinsam mit dem Beschichtungsmittel als Beschichtungsmittelgemisch auf die Dekoroberfläche aufgetragen. Der Haftvermittler ist dabei in das Beschichtungsmittel eingemischt, sodass dieses zusätzlich zu den Beizadditiven noch den Haftvermittler umfasst. So kann beispielsweise bei Dekoroberflächen, die als Kunstharzoberfläche ausgebildet sind, eine besonders gute Anbindung des Beschichtungsmittels dadurch erreicht werden, dass zuerst eine separate Schicht eines Haftvermittlers auf die Dekoroberfläche aufgetragen wird und anschließend der Auftrag des Beschichtungsmittels mit einem eingemischten Haftvermittler erfolgt. Gerade bei der Ausbildung von Lackoberflächen als Dekoroberflächen reicht es jedoch häufig aus, den Haftvermittler in das Beschichtungsmittel einzumischen.

Anzumerken ist, dass bspw. zur Verbesserung der Beizbarkeit und beim Auftrag einer separaten Haftvermittlerschicht auch der Haftvermittler ein Beizadditiv enthalten kann.

Nach einer Weiterbildung der Erfindung umfasst der Haftvermittler einen UV-Acrylat-Lack oder einen UV-Polyurethan-Lack (PU-Lack). Dies betrifft sowohl einen als separate Schicht aufzutragenden Haftvermittler als auch einen in das Beschichtungsmittel einzumischenden Haftvermittler. Sowohl UV-Acrylat-Lack als auch UV-Polyurethan-Lack sind besonders flexibel einsetzbar und bilden mit unterschiedlichsten Dekoroberflächen eine besonders sichere Verbindung aus.

Besonders bevorzugt wird die Dekoroberfläche zur Vorbehandlung koronabehandelt, angeschliffen, angeätzt, mittels einer Säure oder Lauge, pulverbeschichtet, plasmabehandelt, flammenbehandelt und / oder einer Fluorierung unterzogen. Die vorgenannten Vorbehandlungsschritte können dabei alternativ oder ergänzend zur Vorbehandlung mittels des oben beschriebenen Haftvermittlers erfolgen.

Als Beschichtungsmittel kommen beispielsweise mit Beizadditiven versetzte flüssige Kunstharze infrage, die auf die Oberfläche aufgetragen und mit dieser in einer Presse verpresst werden. Nach einer Weiterbildung der Erfindung ist jedoch vorgesehen, dass als Beschichtungsmittel ein mit einem Beizadditiv versetzter Lack (entsprechend der oben genannten Definition) aufgetragen wird. Ein Beschichtungsmittel auf Grundlage eines Lacks lässt sich besonders einfach verarbeiten und insbesondere die nach dem Auftrag durchzuführende Aushärtung kann ohne schädlichen Eingriff in die unter der Beschichtungsmittelschicht angeordnete Dekoroberfläche erfolgen.

Gemäß einer Weiterbildung der Erfindung wird als Beizadditiv Kaolin, Kreide, Tonerde, Kieselerde, Glimmer, Quarzsand, Silikat, Glaskugeln, Glasmehl, Zellulose oder Naturfasern verwendet. Kaolin kann bspw. als hydratisiertes Aluminiumsilikat eingesetzt werden. Vorzugsweise können die Beizadditive silanisiert sein. Besonders bevorzugt wird Kaolin in hydrierter und/oder kalzinierter Form eingesetzt, wobei eine Mischung, bspw. im Verhältnis von 50Gew.-% : 50 Gew.-%, der beiden Formen vorteilhaft ist. So ermöglicht die kalzinierte Form eine besonders gute Fixierung der Beizfarben, während die hydratisierte Form transparenter ist, und somit eine reduzierte Abdeckung des Dekors verhindert. Die bevorzugten Beizadditive können sowohl bei einem als Lack ausgebildeten Beschichtungsmittel als auch bei einem als Kunstharz ausgebildeten Beschichtungsmittel verwendet werden.

Weiter wird vorzugsweise silanisiertes Kaolin verwendet, da dieses zusätzlich die Haftung der Beizfarbe verbessert. Dieses kann als Gemisch mit nicht silanisiertem Kaolin eingesetzt werden. Besonders vorteilhaft beträgt dabei der Anteil des silanisierten Kaolins zwischen 50 Gew.-% bis 80 Gew.-% des gesamten Kaolinbedarfs.

Kaolin und Kreide erzeugen zudem bei als flüssige Beize aufgetragenen Farbstoffen einen Saugeffekt, mittels dem die Farbstoffe besonders einfach in die Beschichtung eingetragen werden. Zudem erfolgt bei Kaolin und Kreide eine besonders gute Fixierung der Farbstoffe in der Beschichtung.

Um den Eintrag des Farbstoffes in die Beschichtung weiter zu verbessern und damit auch die Einfärbung der Oberfläche besonders einfach auszugestalten beträgt nach einer Weiterbildung der Erfindung der Gewichtsanteil des Beizadditivs am Beschichtungsmittel vor dem Auftragen der Beschichtung 10 Gew.-% bis 60 Gew.-%, bevorzugt 10 Gew.-% bis 50 Gew.-%, besonders bevorzugt 20 Gew.-% bis 50 Gew.-%, vorzugsweise 30 Gew.-% bis 50 Gew.-%. Die bevorzugten Gewichtsverhältnisse bei der noch aufzutragenden Beschichtung gewährleisten eine besonders gute und gleichmäßige offenporige Ausbildung der Oberfläche, sodass auch die Aufnahme der Farbpigmente in die Kunstharzoberfläche/Lackoberfläche bzw. die Fixierung dieser in der jeweiligen Oberfläche besonders gleichmäßig und gut erfolgen kann.

Nach einer Weiterbildung der Erfindung umfasst das Beschichtungsmittel einen Lack auf Basis eines Aminoplasten, insbesondere ein Harnstoffharz, wie UF, MUF, Acrylat, Polyester, PUR, Nitrocellulose und/oder Phenolharz oder ein Gemisch von mindestens zwei der vorgenannten Stoffe. Auch kann bspw. ein Lack auf Basis von Acryl, Alkyd, und/oder Latex verwendet werden. Die Lacke können insbesondere als Dispersionen ausgebildet sein. Auch ist es beispielsweise möglich einen Haftvermittler auf bspw. UV-Lack-Basis mit einem Beizadditiv als Beschichtungsmittel mit Beizadditiv zu nutzen.

Dabei wird bevorzugt als Beschichtungsmittel mit Beizadditiv zum Herstellen einer Lackoberfläche ein Lack-Kaolin-Gemisch verwendet.

Besonders bevorzugt wird bei dem Beschichtungsmittel ein Lack auf Basis von Acrylat oder PUR, bspw. als UV-Acrylat-Lack oder als UV-PU-Lack verwendet. Ein Lack auf Basis von Acrylat oder PUR wird zudem vorzugsweise mit einem Beizadditiv auf Basis von Kaolin verwendet, da bei dieser Kombination ebenfalls eine besonders gleichmäßige Verteilung der Beizadditive im Beschichtungsmittel und eine besonders gute Bindung der nachträglich aufzutragenden Beize in der Schicht aus Beschichtungsmittel ermöglichen. Zudem sind die als Haftvermittler besonders geeigneten UV-Acrylat-Lacke bzw. UV-PU-Lacke auch mit entsprechenden Beschichtungsmitteln, die auf Basis von Acrylat oder PU aufgebaut sind, besonders vorteilhaft kombinierbar. Vorzugsweise beruhen sowohl der Lack des Beschichtungsmittels als auch der Haftvermittler auf Basis der gleichen Stoffgruppe.

Nach einer Weiterbildung der Erfindung erfolgt der Auftrag des Beschichtungsmittels auf die Oberseite der Trägerschicht, d.h. auf die vorbehandelte Dekoroberfläche, mit einer Auftragswalze, einem Rakel oder einer Sprühvorrichtung. Hierdurch ist die Schichtdicke besonders einfach und dünn einzustellen, so dass die guten technischen Eigenschaften der Dekoroberfläche weitestgehend erhalten bleiben.

Die nachträgliche farbliche Bearbeitung erfolgt nach vollständiger Trocknung und Härtung der Beschichtungsmittellage und kann insbesondere mittels üblicher Holzbeizen, insbesondere üblicher Wasserbeizen, Ölbeizen oder Lösemittelbeizen für Holzoberflächen erfolgen. Dabei wird die durch das Dekor vorgegebene Grundfarbe der Dekoroberfläche nachträglich, d. h. nach dem eigentlichen industriellen Fertigstellen der Kunstharzoberfläche/Lackoberfläche individuell verändert.

Die farblich veränderbare Dekoroberfläche ist gegenüber den beizbaren Massivholzoberflächen deutlich kostengünstiger und widerstandsfähiger gegenüber äußeren Einflüssen.

Unabhängig von ihrer Ausbildung als Kunstharzoberfläche oder Lackoberflächen und auch unabhängig von der verwendeten Materialart für die Schicht aus Beschichtungsmittel bzw. unabhängig von dem verwendeten Beizadditive kann nach dem Auftragen und ggf. trocknen der Beize eine weitere insbesondere dünne Schutzschicht auf die Oberfläche aufgetragen werden, um auch die Farbpartikel aus der Beize vor äußeren Einflüssen zu schützen. Für die Schutzschicht kann beispielsweise ein Lack, insbesondere entsprechend den vorgenannten Materialien für die Beschichtungsmittelschicht verwendet werden. Auch ist es Beispielsweise möglich, dass die Schutzschicht als Öl oder Wachs aufgetragen wird, wobei diese Verwendung insbesondere bei Fußbodenpaneelen zum Einsatz kommt.

Weiter wird die Aufgabe gelöst durch einen Werkstoff mit einer verwendungsfertigen, vollständig ausgehärteten Dekoroberfläche, mit einer auf der Oberseite der Dekoroberfläche aufgetragenen Schicht eines Beschichtungsmittels mit Beizadditiven, die eine poröse Oberfläche ausbildet und zur Aufnahme und Anbindung von Farbpartikeln ausgebildet ist.

Die Farbpartikel werden dabei üblicherweise mittels einer Farbbeize, d. h. beispielsweise einer Wasserbeize, Ölbeize oder Lösemittelbeize aufgetragen. Die erfinderische Werkstoffplatte ermöglicht dabei neben der industriellen Bearbeitung auch eine Bearbeitung durch den, den Werkstoff verarbeitenden Handwerker oder den Endkunden, d. h. auch eine nicht industrielle Beeinflussung der Farbgebung der Kunstharzoberflächen.

Ein Werkstoff umfasst bspw. eine Trägerschicht, auf die ein Dekor aufgedruckt ist und die eine oder mehrere Lagen Papier, wie Dekorpapier und/oder Kraftpapier aufweist. Auch kann als Werkstoff ein Tragwerkstoff verstanden werden, auf den ein Dekor im Direktdruck aufgedruckt ist. Der Werkstoff kann insbesondere als Plattenwerkstoff ausgebildet sein. Der Werkstoff kann aus unterschiedlichem Material bestehen und bspw. ein Holzwerkstoff sein. Besonders geeignet sind Spanwerkstoffe, Faserwerkstoffe wie MDF-,HDF-, oder CDF-Werkstoffe, OSB-Werkstoffe, Zementfaserwerkstoffe, Gipsfaserwerkstoffe oder WPC-Werkstoffe, die in der Ausbildung als Plattenwerkstoffe besonders geeignet sind.

Anzumerken ist, dass die nachträgliche Einfärbbarkeit der verwendungsfertigen vollständig ausgehärteten Dekoroberfläche mittels der mit dem Beizadditiv versetzten aufgetragenen Beschichtungsmittelschicht bewirkt wird und zwar unabhängig von ihrer Ausbildung als Kunstharzoberfläche oder Lackoberfläche. Die verwendungsfertige vollständig ausgehärtete Dekoroberfläche weist vor dem Auftrag der Beschichtungsmittelschicht keine Beizadditive auf.

Eine weitere Anwendungsmöglichkeit für die Schicht aus Beschichtungsmittel mit Beizadditive besteht beispielsweise darin, bei Möbeldekoren aber auch bei Paneelen für Wand-, Decken- oder Fußböden mit Synchronpore und unabhängig davon, ob als Lackoberfläche oder Kunstharzoberfläche ausgebildet, eine optische Verstärkung der Pore zu bewirken. Die Poren sind zumeist als Vertiefung ausgebildet. D. h. nach dem Auftrag des Beschichtungsmittels mit Beizadditive sammelt sich im Bereich der Vertiefung eine größere Menge an Beschichtungsmittel, die auch mehr Farbpartikel aus der Beize aufnehmen kann, sodass die Farbgebung der Poren stärker verändert wird gegenüber den anderen Abschnitten der Dekoroberfläche. Dies kann zudem dadurch verstärkt werden bzw. alternativ dadurch erzeugt werden, dass das Beschichtungsmittel direkt nach dem Auftrag teilweise wieder abgetragen wird und zwar derart, dass vorrangig nur im Bereich der Poren (Vertiefungen) Beschichtungsmittel mit Beizadditiv vorhanden bleibt.

Obwohl manche Aspekte im Zusammenhang mit einem Verfahren beschrieben wurden, versteht es sich, dass diese Aspekte auch eine Beschreibung der entsprechenden Vorrichtung darstellen, so dass ein entsprechender Verfahrensschritt als Block- oder ein Bauelement einer Vorrichtung zu verstehen ist. Analog dazu stellen Aspekte, die im Zusammenhang mit einem Block- oder ein Bauelement einer Vorrichtung beschrieben wurden, auch eine Beschreibung eines entsprechenden Verfahrensschritts dar.

Im Weitern wird die Erfindung anhand von Ausführungsbeispielen näher beschrieben. Es zeigen:

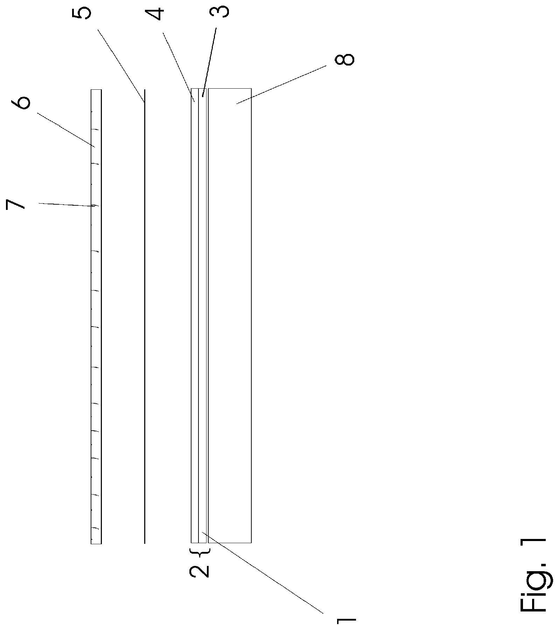

- Fig. 1: schematisch eine nach dem erfinderischen Verfahren hergestellte farblich verän-derbare;
- Bsp.1: beschreibt das Herstellen einer farblich anpassbaren im Direktdruck hergestellten Dekoroberfläche.

Figur 1 zeigt in einer seitlichen Ansicht eine Trägerschicht 1 mit einer verwendungsfertigen Dekoroberfläche 2. Die Trägerschicht 1 ist hier als kunstharzgetränktes Dekorpapier 3 mit einem Dekordruck ausgebildet. Oberhalb des Dekorpapieres ist ein Overlay 4 angeordnet, das Teil der Dekoroberfläche 2 ist. Das Dekor zeigt hier eine Holzmaserung, kann alternativ aber beispielsweise auch Fliesendekor, Steindekor oder Fantasiedekore zeigen. Das Overlay 4 umfasst ein kunstharzgetränktes Overlaypapier, das im ausgehärteten Zustand vollständig transparent ist, sodass das Dekor weiterhin sichtbar ist.

Unterhalb der Trägerschicht 1 ist eine Werkstoffplatte 8 ausgebildet. Die Werkstoffplatte 8 besteht aus einem Holzwerkstoff, hier einer Spanplatte. Alternativ können auch Werkstoffe aus anderen Materialien oder andere Holzwerkstoffplatten, wie MDF-Platten, HDF-Platten o.ä. verwendet werden. Die Trägerschicht ist mit der Werkstoffplatte fest verklebt.

Zwischen der Werkstoffplatte 8 und dem Dekorpapier 3 können zudem weitere Zwischenschichten angeordnet sein. Auch kann anstatt einer Holzwerkstoffplatte bspw. eine weitere Papierschicht (hier nicht dargestellt), bspw. Kraftpapier angeordnet sein.

Wie auch das Overlay 4 wurde auch das Dekorpapier 3 mit einem Kunstharz getränkt. Hier wurde bei beiden Schichten ein Melamin verwendet. Die Kunstharzoberfläche 2 wurde in einer Kurztaktpresse (hier nicht dargestellt) unter Einwirkung von Druck und Wärme mit der Werkstoffplatte verklebt und dabei vollständig ausgehärtet. Dabei wurde in die Oberfläche des Overlay 4 ein Strukturdekor (hier nicht dargestellt) eingeprägt.

Um die Kunstharzoberfläche 2 nachträglich farblich zu verändern, d. h. beizbar zu machen, wurde die Kunstharzoberfläche vorbehandelt. Dafür wurde hier ein flüssiger Haftvermittler 5 auf die strukturierte Kunstharzoberfläche 2 aufgetragen. Dies erfolgt mittels einer Sprühvorrichtung (hier nicht dargestellt), alternativ bspw. mittels einer Walzvorrichtung. Der Haftvermittler 5 wurde anschließend angeliert.

Danach wurde eine Schicht 6 eines Beschichtungsmittels, das ein Beizadditiv 7 enthält, auf den Haftvermittler 5 aufgetragen. Das Beschichtungsmittel ist als UV-Lack auf Acrylatbasis ausgebildet. Es wurde mittels einer Walzenanordnung (hier nicht dargestellt) auf den Haftvermittler 5 aufgetragen. Nach dem Auftrag der Schicht 6 wurde diese und der ebenfalls auf einem UV-Lack basierende Haftvermittler 5 mit UV-Licht vollständig ausgehärtet.

Alternativ oder ergänzend ist es auch möglich, den Haftvermittler 5 gemeinsam mit dem Beschichtungsmittel als Gemisch auf die Dekoroberfläche 2 aufzutragen. Auch hätte alternativ oder ergänzend eine "mechanische" Vorbehandlung der Dekoroberfläche 2 erfolgen können. Dies wäre bspw. durch eine Koronabehandlung, eine Florierung, durch Anschleifen, durch Anätzen oder durch eine Plasma- oder Flammenbehandlung möglich gewesen.

Aufgrund der vorhandenen Beizadditive 7 bildet die Schicht 6 eine poröse Oberfläche (hier nicht dargestellt) aus, d. h., in der Schicht 6 liegen weitestgehend gleichmäßig verteilt die Beizadditive 7 vor. Als Beizadditiv 7 ist hier Kaolin (hier nicht dargestellt) ins Beschichtungsmittel gemischt. Dabei war das prozentuale Gewichtsverhältnis zwischen dem flüssigen Beschichtungsmittel und Kaolin vor dem Auftrag 1:1.

Zum nachträglichen farblichen Verändern der Kunstharzoberfläche 2 wird ein Beizmittel, beispielsweise auf Lösemittelbasis, Wasserbasis oder Ölbasis auf die Schicht 6 aufgetragen. Die Farbstoffe im Beizmittel werden von den Beizadditiven 7 aufgenommen und an diesen verankert, die Lösungsmittel verdunsten. Hierdurch wird der gesamte Farbeindruck der Kunstharzoberfläche 2 verändert.

In einem weiteren Ausführungsbeispiel wird eine im Direktdruck hergestellte Dekoroberfläche bereitgestellt. Die Dekoroberfläche ist vollständig ausgehärtet und verwendungsfertig. Zum Herstellen der Dekoroberfläche wurde eine Holzwerkstoffplatte, hier eine MDF Platte, durch Schleifen und Grundiervorgänge zum Direktdruck vorbereitet. Auf die Grundierschicht/en erfolgt der direkte Aufdruck des Farbdekores, in diesem Fall mittels eines Walzendrucks. Alternativ könnte das Farbdekor auch mittels eines Digitaldrucks aufgedruckt werden. Anschließend wurde das Farbdekor mit einer Schutzschicht versehen, die aus mehreren dünnen Schichten eines Klarlacks besteht. Der Klarlack besteht auf Basis eines UV-Acrylat-Lacks.

Über die Schutzschicht wurde zudem eine Strukturierung der Oberfläche erzeugt. Alle Schichten der Dekoroberfläche wurden vollständig ausgehärtet. Dies ist in diesem Fall mittels UV-Licht erfolgt.

Auf die so hergestellte verwendungsfertige Dekoroberfläche wird anschließend ein mit einem Beizadditiv versetztes Beschichtungsmittel aufgetragen. Der Auftrag erfolgte mittels einer Auftragswalze. Das Beschichtungsmittel umfasst dabei ein Lack-Kaolin-Gemisch, das im Gewichtsverhältnis 1:1 angemischt wurde. Um eine gute Haftung des Beschichtungsmittels auf der Dekoroberfläche zu erreichen, wurde die Dekoroberfläche mittels einer Koronabehandlung vorbehandelt. Zudem wurde für den Lack des Beschichtungsmittels ebenfalls ein UV-Acrylat-Lack verwendet. Anschließend wurde das Gemisch aus Lack und Beizadditiven mittels einer Spritzvorrichtung, alternativ einer Walzenvorrichtung auf die vorbehandelte Dekoroberfläche aufgetragen und vollständig ausgehärtet. Die Holzwerkstoffplatte mit der direkt aufgedruckten Dekoroberfläche und der auf der Oberfläche angeordneten Schicht aus Beschichtungsmittel kann jetzt gebeizt werden. D. h. es kann eine Farbpartikel enthaltende Beize, sowohl industriell als auch vom Endkunden auf die Oberfläche aufgetragen werden. Dies kann beispielsweise mittels einer Walze, eines Pinsels, einer Rolle oder auch einem Tuch erfolgen. Dabei dringen die Farbpartikel in die durch das Kaolin gebildete poröse Oberfläche des Beschichtungsmittels ein und werden hier fixiert. Nach dem Entfernen der überschüssigen Beize und dem Trocknen der Beize liegt eine farbliche Veränderung der Dekoroberfläche vor, wobei das Dekor weiterhin sichtbar ist. Zum Schutz der gebeizten Beschichtungsmittelschicht kann zudem eine weitere Schutzschicht, beispielsweise einer Lackschicht abschließend aufgetragen werden.

Ein weiteres Ausgangsprodukt zum Herstellen einer nachträglich veränderbaren Dekoroberfläche können bspw. Finishfolien darstellen. Diese weisen beispielsweise eine Trägerschicht aus Papier oder Kunststoff auf. Auf dieser Trägerschicht ist ein Dekor aufgedruckt und eine Schutzschicht ist oberhalb des Dekors angeordnet. Das Dekor und die Schutzschicht sind vollständig getrocknet bzw. ausgehärtet.

Üblicherweise wird eine Finishfolie mittels einer Kaschieranlage und beispielsweise mit einem Heißkleber auf einen Werkstoff wie eine Holzwerkstoff Platte aufgeklebt/aufkaschiert. Die Dekoroberfläche der Finishfolie kann auch entsprechend der vorbeschriebenen Beispiele vor oder nach dem Aufkaschieren einer Vorbehandlung unterzogen werden, sodass anschließend eine Schicht des Beschichtungsmittels mit Beizadditive aufgetragen, getrocknet bzw. vollständig ausgehärtet wird, sodass die Finishfolie eine nachträglich farblich veränderbare Dekoroberfläche aufweist.

## Patentansprüche

1. Verfahren zum Herstellen einer farblich veränderbaren Dekoroberfläche (2) mit den Schritten:
- Bereitstellen einer verwendungsfertigen vollständig ausgehärteten, einen Kunstharz oder Lack umfassenden Dekoroberfläche (2) auf einer Trägerschicht (1),
- Auftragen mindestens einer Schicht (6) eines Beschichtungsmittels mit einem Beizadditiv (7), das die Aufnahme von Farbpartikeln ermöglicht,
- Trocknen und Aushärten der Beschichtungsmittelschicht (6).

2. Verfahren nach Anspruch 1, **dadurch gekennzeichnet, dass** die verwendungsfertige Dekoroberfläche (2) vor dem Auftragen der mindestens einen Schicht eines Beschichtungsmittels vorbehandelt wird.

3. Verfahren nach Anspruch 2, **dadurch gekennzeichnet, dass** zur Vorbehandlung ein Haftvermittler auf die Dekoroberfläche (2) aufgetragen wird, wobei der Haftvermittler als separate Schicht vor Auftrag der Beschichtungsmittelschicht (6) aufgetragen und angeliert, angetrocknet oder vollständig ausgehärtet wird.

4. Verfahren nach Anspruch 2 oder 3, **dadurch gekennzeichnet, dass** der Haftvermittler gemeinsam mit dem Beschichtungsmittel als Beschichtungsmittelgemisch auf die Dekoroberfläche (2) aufgetragen wird.

5. Verfahren nach einem der vorhergehenden Ansprüche, **dadurch gekennzeichnet, dass** der Haftvermittler einen UV-Acrylat-Lack oder einen UV-Polyurethan-Lack (PU-Lack) umfasst.

6. Verfahren nach einem der vorhergehenden Ansprüche, **dadurch gekennzeichnet, dass** zur alternativen oder ergänzenden Vorbehandlung die Dekoroberfläche (2) Korona behandelt, angeschliffen, angeätzt, mittels einer Säure oder Lauge, pulverbeschichtet, plasmabehandelt, flammenbehandelt und / oder einer Fluorierung unterzogen wird.

7. Verfahren nach einem der vorhergehenden Ansprüche, **dadurch gekennzeichnet, dass** als Beschichtungsmittel ein Gemisch umfassend einen Lack und ein Beizadditiv (7) aufgetragen wird.

8. Verfahren nach einem der vorhergehenden Ansprüche, **dadurch gekennzeichnet, dass** als Beizadditiv (7) Kaolin, Kreide, Tonerde, Kieselerde, Glimmer, Quarzsand, Silikat, silanisierte Stoffe, Glaskugeln, Glasmehl, Zellulose oder Naturfasern verwendet wird.

9. Verfahren nach einem der vorhergehenden Ansprüche, **dadurch gekennzeichnet, dass** als Beizadditiv (7) Kaolin in hydrierter und/oder kalzinierter Form eingesetzt wird.

10. Verfahren nach einem der vorhergehenden Ansprüche, **dadurch gekennzeichnet, dass** der Gewichtsanteil des Beizadditives (7) am Beschichtungsmittel zwischen 10 Gew.-% bis 60% Gew.-%, bevorzugt 20 Gew.-% bis 50 Gew.-%, besonders bevorzugt 30 Gew.-% bis 50 Gew.-% beträgt.

11. Verfahren nach einem der vorhergehenden Ansprüche, **dadurch gekennzeichnet, dass** ein Beschichtungsmittel verwendet wird, das einen Lack auf Basis eines Aminoplasten, insbesondere ein Harnstoffharz, wie UF oder MUF, von Acrylat, Polyester, PUR, Phenolharz, Nitrozellulose oder auf Basis eines Gemisches von mindestens zwei der vorgenannten Lacke umfasst.

12. Verfahren nach einem der vorhergehenden Ansprüche, **dadurch gekennzeichnet, dass** der Auftrag des Beschichtungsmittels auf die Oberseite der Trägerschicht (1) mit einer Auftragswalze, einem Rakel oder einer Sprühvorrichtung erfolgt.

13. Werkstoff mit einer verwendungsfertigen, vollständig ausgehärteten Dekoroberfläche (2), mit einer auf der Oberseite der Dekoroberfläche (2) aufgetragenen Schicht (6) eines Beschichtungsmittels mit Beizadditiven (7), das eine poröse Oberfläche ausbildet und zur Aufnahme und Anbindung von Farbpartikeln ausgebildet ist.
